# EUROPEAN PATENT SPECIFICATION

(11) **EP 1 260 311 B1**
(45) Date of publication and mention of the grant of the patent: **02.11.2005**
(21) Application number: 02010821.3
(22) Date of filing: 15.05.2002
(51) Int. Cl.: B23Q 39/00, B23Q 7/00, B23Q 1/25

(54) **Device for items working**
Vorrichtung für die Bearbeitung von Werkstücken
Dispositif pour le travail de pièces

(30) Priority: 18.05.2001 IT MI20011041
(43) Date of publication of application: 27.11.2002
(73) Proprietor: Arnaboldi, Marco, 22063 Cantu' (Como) (IT)
(72) Inventor: Arnaboldi, Marco, 22063 Cantu' (Como) (IT)
(74) Representative: Tansini, Elio Fabrizio

(56) References cited:
- EP-A- 1 122 027
- DE-A- 19 516 263
- DE-A- 19 620 449
- DE-A- 19 736 252
- DE-A- 19 907 617
- DE-U- 29 623 055

## Description

The present invention relates to a process and a device for item working.

It is known that machines capable of carrying out a series of mechanical working operations on appropriate items or pieces that in turn can be blocks, panels or prisms for example, made of wood, aluminium and other materials, are widely spread in many handicraft or industrial plants.

In this type of machinery, the item to be submitted to working is loaded into an appropriate working station where it is firmly kept in place by suitable devices.

According to the known art (particularly spread in the field of machinery adapted to work wooden panels), this working station is made up of a support surface, on which the piece to be worked is laid down; disposed over the support surface (and the piece to be worked) is appropriate grip means that is employed (by lowering it towards the support surface, so that it firmly fastens the piece to be worked to said support surface) to lock the piece during working.

For example, it is known from DE 19907617 a machine for loading and working items wherein a rotating support structure, comprising two disc-shaped lateral elements and two oscillating trays supported therebetween, is rotatably engaged about an axis so as to bring one oscillating tray in proximity of a working head while the other oscillating tray is brought to an area accessible to an operator for loading items.

In such a known device, the oscillating trays have a fixed length and do not present grasping clamps.

It is also known from DE 19516263 another machine for working items wherein a robotic complex is hanging over a tilting support; more in detail, such a tilting support comprises a series of base elements relatively displaceable along a longitudinal axis and where an item is laid on.

However, in the just mentioned device, a single item can be carried at a time, and moreover a "loading site" or station cannot be defined, since the tilting support serves mainly for purposes of varying relative angles between a tool supported by the robotic complex and a surface of the item which must undergo machining by that tool.

Any working carried out on the piece, once the latter has been locked, is usually performed by a tool-holding head that is generally robotized (and is therefore capable of moving in a preestablished number of translation and/or rotation axes) and carries a multiplicity of tools (drills, milling cutters, devices to hook dowels, adhesive dispensers, etc.) thereon.

While the known art briefly described above is widely spread and has many application variants, it however also has some limits.

In fact, it will be recognized that, in spite of the fact that an important automation degree can be given to this machinery (in particular, to the operating modalities of the tool-holding head), the support surface and grip means are substantially turned towards the same side as the working head. As a result, loading of the piece to be worked, that is generally carried out by one or more assigned operators, takes place from a direction involving entrance of the operator into the space where the tools of the machinery head operate.

It is therefore obvious that there is a non negligible risk, in terms of safety, for the operator assigned to loading of the machine who could be injured by a possible contact with the tools still in operation.

To obviate these risks concerning safety, operation of the tool-holding head is required to be stopped; another operating drawback however results therefrom, because not only the overall efficiency of the plant (that must be stopped and restarted several times) is limited, but the production times too are extended (in fact downtime intervals during which the machinery does not work are to be considered).

Again, the machinery of known type appears to be unpractical for loading, exactly due to the fact that the support surface of the piece to be worked is turned towards the tool-holding head: actually, due to this construction architecture, loading of the piece is hindered by the presence of the tool-holding head. To obviate this unpractical loading due to bulkiness of the head, possibly a system adapted to move the tool-holding head apart can be arranged, but this involves heavier costs as well as a bulkier and more complicated machine.

Under this situation, the technical task underlying the present invention is to conceive a device for item working capable of substantially obviating the mentioned drawbacks.

Mainly, it is an aim of the present invention to provide a device for item working enabling a high safety level to be reached by the operators assigned to loading of the piece, both during the activity periods of the tool-holding head and during loading of the pieces onto the device itself.

Within the scope of said technical task it is also an important aim of the invention to provide a device capable of increasing the overall production efficiency by reducing or even eliminating possible downtime.

In addition, the present invention aims at providing a device enabling easy loading, irrespective of the position of the tool-holding head.

The technical task mentioned and the aims specified are substantially achieved by a device for item working having the features set out in the appended claim 3.

Description of a preferred but not exclusive embodiment of an item working device in accordance with the invention is now given hereinafter by way of non-limiting example with the aid of the accompanying drawings, in which:

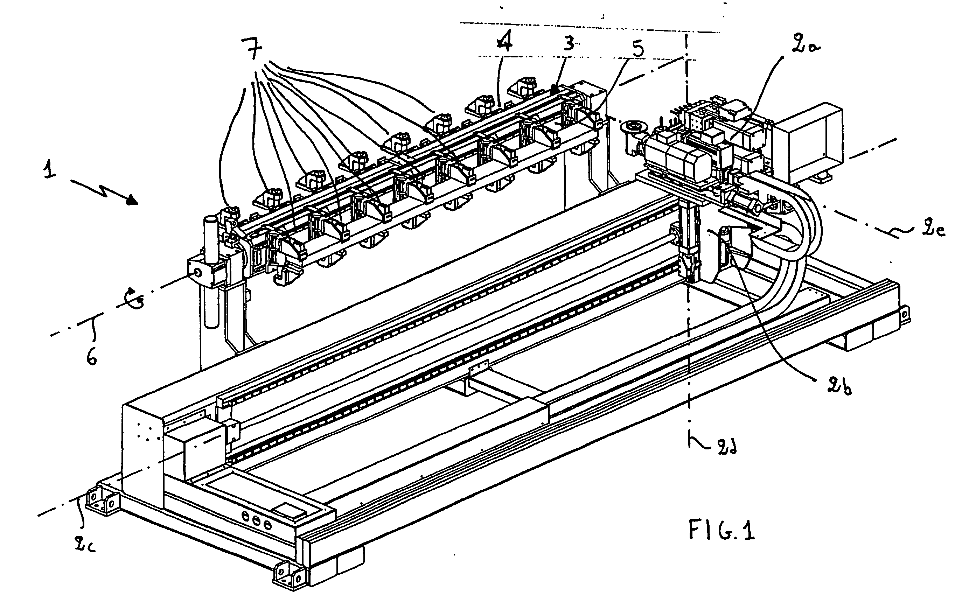

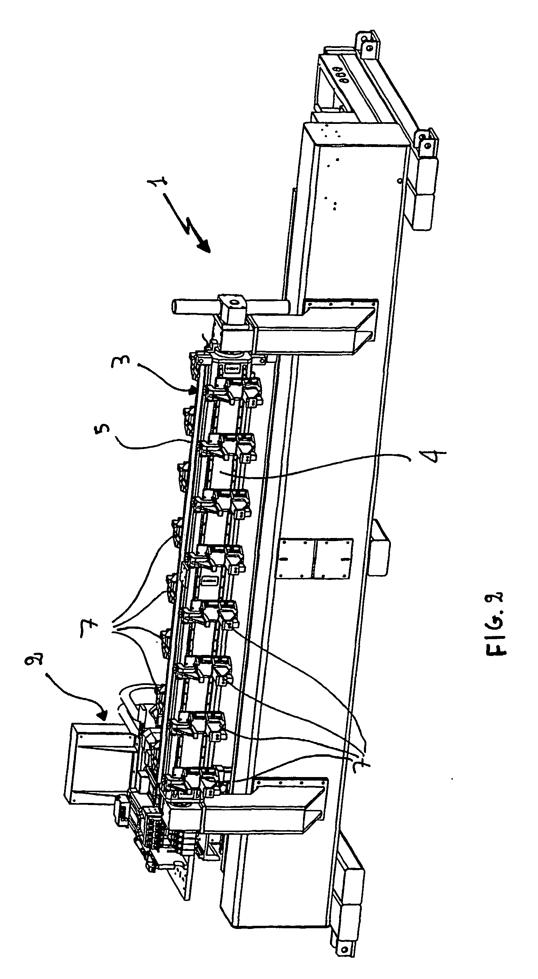

- Figs. 1 and 2 are perspective views (on opposite sides) of an item working device in accordance with the present invention;

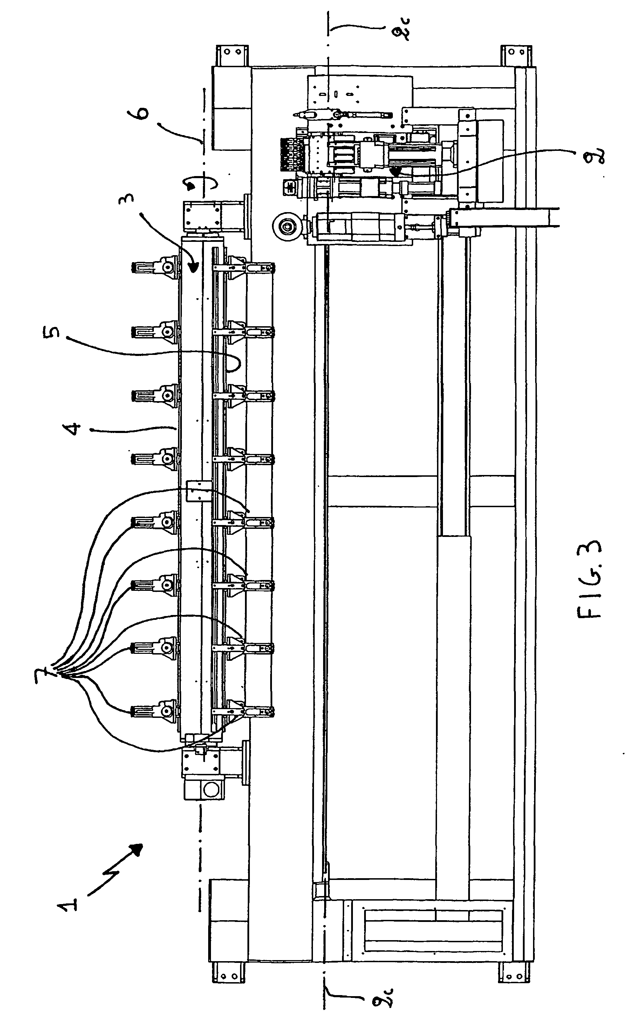

- Fig. 3 is a top view of the device shown in Figs. 1 and 2;

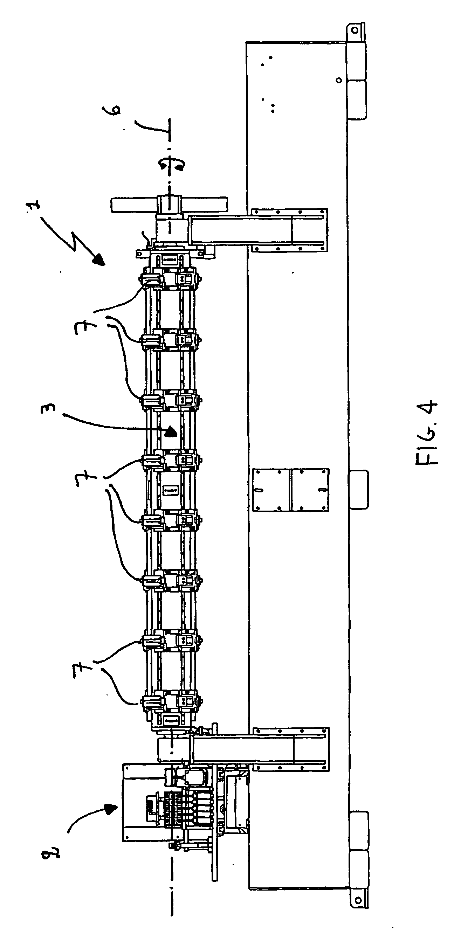

- Fig. 4 is a front view of the device in Figs. 1 and 2; and

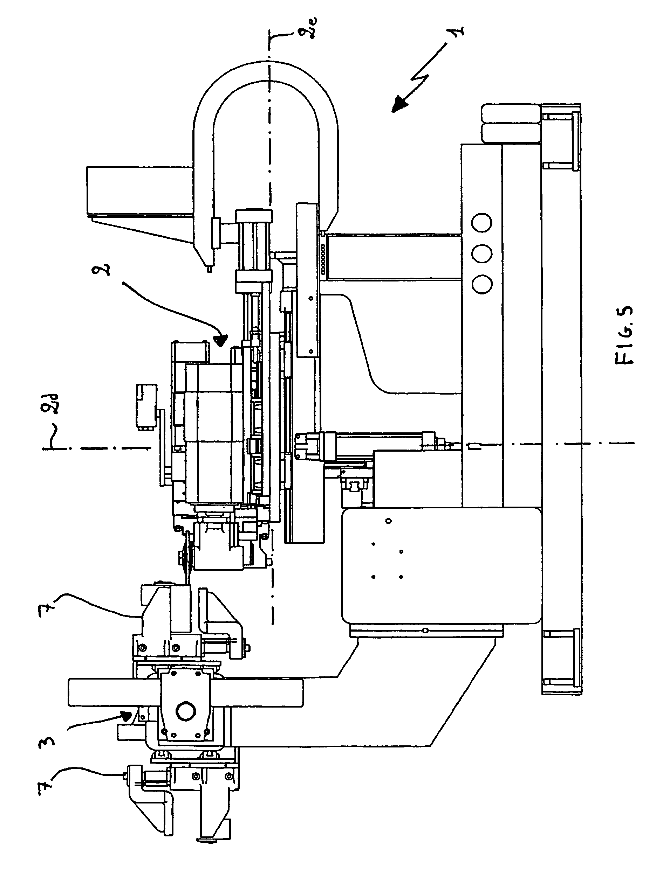

- Fig. 5 is a side view of the device seen in Figs. 1 and 2.

With reference to the drawings, a device in accordance with the invention has been generally identified by reference numeral 1.

It substantially comprises a support 3 designed to receive at least one piece to be worked or workpiece, and one or more tool-holding heads 2 which are operatively active close to said support 3 to carry out a predetermined series of working operations on the piece itself.

Advantageously, support 3 is movable, relative to the tool-holding head 2, between a first operating configuration (in which it enables loading of at least one first piece to be worked) and a second operating configuration (in which the same piece, loaded on support 3, is disposed close to the tool-holding head 2 and is therefore in such a condition that it can be submitted to the desired working operations).

In accordance with the present invention, the movement modalities of support 3 are conveniently studied so as to ensure a high safety level to the operators designed to load the pieces to be worked; in more detail, it should be noted that the particular mobility of support 3 is such studied that it enables the operator to terminate the piece loading operations (in which one or more pieces are involved, depending on circumstances) without the space where the tool-holding head 2 operates being overrun.

In other words, the first and second operating configurations that support 3 can take are suitably selected by the operator who, when loading of the piece to be worked onto the device is required, causes the support to go to the first operating configuration, whereas once the piece to be worked has been loaded, makes the support take the second operating configuration to enable execution of all working by the tool-holding head 2.

In more detail as regards structure of the invention, support 3 comprises at least one primary housing seat 4 designed to receive the workpiece.

In accordance with the present invention, this primary housing seat 4 is accessible to an operator at the first operating condition of support 3, whereas it faces the tool-holding head 2 at the second operating condition of support 3.

Support 3 further comprises at least one secondary housing seat 5 which is also designed to receive a workpiece; due to this structural feature, device 1 is able to receive a workpiece while it is already acting on another workpiece (following modalities to be clarified in the following).

Unlike the primary housing seat 4, the secondary housing seat 5 faces the tool-holding head 2 in the first operating condition of support 3, while it is accessible to an operator in the first operating condition of support 3.

In accordance with the present invention, the primary housing seat 4 and secondary housing seat 5 are connected to support 3 in such a manner that the primary housing seat 4 is accessible to an operator while the secondary housing seat 5 faces the tool-holding head 2; conversely, while the primary housing seat 4 faces the tool-holding head 2, the secondary housing seat 5 is accessible to an operator.

These relative locations of the housing seats 4 and 5, that substantially are characteristic of the two operating configurations according to which support 3 is moved, advantageously enable operation following the above specified modalities (i.e. they enable a piece to be worked to be loaded in a sure manner and safe from possible interferences with the tool-holding head 2, while the head 2 itself is carrying out the desired working operations on another workpiece).

Movement of support 3 can be carried out in any manner, provided the desired operating configurations (in which the workpieces can be loaded in a sure manner) are always verified; according to a particularly valuable embodiment of the present invention (which is also shown in the accompanying figures), support 3 is rotatably mounted around an operating axis 6. In this way, movement of support 3 to the first and/or second operating configuration is practically carried out by rotation (through a predetermined angle, that in the example shown in the drawings is approximately 180°) around such an operating axis 6. The primary engagement seat 4 and secondary engagement seat 5 are substantially disposed on opposite sides of the rotatable support 3, so that they can be considered as facing two distinct half spaces (ideally divided by a vertical plane containing the operating axis 6). Conveniently, in either of the two half spaces there is the tool-holding head 2 whereas the remaining half-space represents the work area of the operators assigned to device 1.

Through rotation of the support around the operating axis 6, either the primary engagement seat 4 or the secondary engagement seat 5 are present in the operators' work area, depending on the circumstances; therefore positioning or removal of the pieces to be worked or already submitted to working (for instance, before or after working carried out by the tool-holding head 2) is made possible.

As can be viewed from the figures, the primary engagement seat 4 and secondary engagement seat 5 comprise grip means, which is designed to engage at least one piece to be worked; conveniently, this grip means consists of a plurality of clamps 7 that are disposed at predetermined intervals along the operating axis 6.

Advantageously, these clamps 7 are slidably engaged along the operating axis 6 (or better, on the side wall of support 3, at the first and second engagement seats 4 and 5); in this way, two consecutive clamps define a given operating pitch 8 that can be changed depending on current requirements.

By examining the tool-holding head 2 in more detail, it is possible to see that it first of all comprises an active portion 2a (carrying a plurality of tools thereon) and a movement block 2b which is connected to the active portion 2a to move it along and/or around a predetermined number of working axes (depending on whether translation and/or rotation axes are concerned).

The tools present on the active portion 2a can be of a great number of types, in accordance with the known art and based on the current requirements. Conveniently, said tools (all or only part of them) are also adapted to be moved relative to the active portion 2a itself (they can be telescopically pushed in or pulled out at the moment of use, for example) between a rest position at which they do not operate on the workpiece, and an operating position at which on the contrary they are brought into contact with the workpiece.

The movement block 2b in turn comprises a given number of actuating units, adapted to carry out spacial movement of the tool-holding head with respect to the workpiece. In the embodiment shown it is possible, for example, to see a primary actuating unit (designed to cause translation of the active portion 2a along a first working axis 2c which is substantially horizontal and parallel to the first operating axis 6), a secondary actuating unit (designed to cause translation of the active portion 2a along a second working axis 2d which is substantially transverse to the first operating axis 6 and the first working axis 2c; as can be seen, this second working axis 2d appears to be vertical) and finally a tertiary actuating unit (designed to cause translation of the active portion 2a along a third working axis 2e transverse to the first operating axis 6 and the second working axis 2d; in the figures, the third working axis 2e is horizontal).

In order to enable a partial or even full automation in operation of device 1 in accordance with the present invention (substantially consisting of one or more series of working operations applicable to one or more pieces loaded thereto), control means are also present; said means is operatively active on the different components of device 1 (i.e. the tool-holding head 2 and/or support 3) to enter a predetermined series of operating parameters.

By exploiting the calculation and processing capacities presently available, it is possible for this control means to comprise a programmable data processing unit (of the type involving a microprocessor, for example) that can be suitably interfaced with device 1 and, upon predetermined inputs by the operators, can carry out the most different working cycles.

Depending on current requirements, the operating parameters to be processed by the control means may comprise rotations of support 3 around the operating axis 6, changes in the operating pitch 8 between two consecutive clamps, movements of the tools to the rest position and/or the operating position, displacement of the tool-holding head 2 along the primary and/or secondary and/or tertiary working axes 2c, 2d and 2e.

Advantageously, it is also possible for these operating parameters to further comprise a predetermined sequence for closing clamps 7 on a workpiece (that conveniently will be executed in an automatic manner on loading of a piece onto the engagement seats 4 or 5, when said seats are accessible to the operator).

Said closing sequence can be entered or programmed in such a manner as to ensure an optimal grasping of the piece to be worked or (in the case of particularly delicate materials, for example) to avoid deformations or degradations of the piece surface; according to a particularly appreciable execution modality, the closing sequence can be accomplished starting from the pair of clamps 7 that are at a greater relative distance on support 3 (in other words, starting from the pair of clamps 7 located at the opposite ends of the engagement seat 4 or 5) and progressively going on so that the pairs of clamps 7 disposed at a gradually decreasing relative distance are subsequently closed on the workpiece (from the outermost to the innermost pairs in the engagement seat 4 or 5).

It will be appreciated at this point that the present invention may contemplate the presence of several engagement seats on support 3, depending on current requirements (based on the production rate to be obtained, for example). For instance, four engagement seats radially spaced apart from each other through 90° can be disposed on support 3: in this case, support 3 will be shiftable through four operating configurations (corresponding to four 90° rotations in succession of the support itself around the first operating axis 6), in which an engagement seat will be accessible to an operator for loading, whereas an engagement seat already carrying a workpiece will be positioned close to the tool-holding head 2. More generally, a predetermined number of engagement seats can be disposed on support 3, so that support 3 will be shiftable in a predetermined corresponding number of operating configurations, in which at least one of the engagement seats will be at all events accessible to the operator, whereas at least one engagement seat will be positioned close to the tool-holding head 2 to enable the latter to carry out working on an already loaded piece.

By virtue of the device of the invention, an innovative and original process to work items can be made according to claim 1.

It will be recognized that this process can be conveniently integrated with a step of loading at least one second workpiece onto support 3; conveniently, loading of the second workpiece can be made while the tool-holding head 2 is carrying out a predetermined series of working operations on the first workpiece.

The invention achieves important advantages.

In fact, first of all, it should be noted that the particular relative arrangement between the two operatively distinct parts of the present device (i.e. the part dedicated to workpiece loading and the part dedicated to execution of working operations) enables a safe and easy use of the device itself by the operators; in other words, due to the innovative and original features of the present invention, possible accidents and injuries due to undesired contacts between the operators and the tool-holding head 2 can be avoided, which is advantageous for industrial safety.

Secondly, it will be also recognized that the present invention enables a more efficient production cycle to be set up, as compared with a machinery of known type, because there is a great reduction in downtime; in fact, due to the features of the present device a second piece to be worked can be loaded while a first piece is under working; positioning of this second piece close to the tool-holding head 2 will be quick and accurate (among other things, without being obliged to forcedly stop the tools that have just finished working on the first piece or without being obliged to move the head apart too much).

The present device also enables loading to be achieved with ease, because the operator is not compelled to position the piece to be loaded by moving it in a space partly occupied by the tool-holding head 2 (or other bulky components).

## Claims

1. A process for working items or pieces, comprising the following steps:
- loading at least one first piece to be worked onto a support (3) of a device (2), SAID SUPPORT (3) BEING IN A first operating configuration in which it enables loading of at least one first piece to be worked AND COMPRISING:
- at least one primary engagement seat (4) provided in the support (3) and designed to receive the workpiece, said primary engagement seat (4) being accessible to an operator close to SAID first operating condition of the support (3) and facing SAID tool-holding head (2) at A second operating condition of the support (3), the primary engagement seat (4) comprising grip elements designed to engage at least one workpiece, said grip elements comprising a plurality of clamps (7) disposed at preestablished intervals along an operating axis (6); AND
- at least one secondary engagement seat (5) provided in the support (3) and designed to receive a piece to be worked, said secondary engagement seat (5) preferably facing the tool-holding head (2) in the first operating condition of the support (3) and preferably being accessible to an operator in the first operating condition of the support (3), the secondary engagement seat (5) comprising grip elements designed to engage at least one workpiece, said grip elements comprising a plurality of clamps (7) disposed at preestablished intervals along an operating axis (6);
- moving the support (3) from a first operating configuration in which it is accessible to an operator to enable loading of the workpiece to a second operating configuration in which the workpiece sets itself close to the tool-holding head (2); and
- carrying out a predetermined series of working operations on the piece by a tool-holding head (2) located close to the support (3),
**characterized in that** it further comprises a step of ACCOMPLISHING A closing sequence starting from a pair of clamps (7) disposed at a greater relative distance on the support (3) and progressively going on and acting on pairs of clamps (7) disposed at a gradually decreasing relative distance, SAID SUB-STEP BEING REALIZED BY control means operatively active on the tool-holding head (2) and/or the support (3) to enter a predetermined series of operating parameters, said operating parameters comprising a predetermined sequence for closing the clamps (7) on a workpiece.

2. A process as claimed in claim 1, **characterized in that** it further comprises a step of loading at least one second workpiece onto the support (3), said loading step of the second workpiece being preferably executed while the tool-holding head (2) is carrying out a predetermined series of working operations on the first workpiece.

3. A device for working items or pieces PUTTING INTO PRACTICE THE PROCESS OF CLAIMS 1 OR 2, comprising:
- at least one support (3) designed to receive at least one first piece to be worked, said support (3) being movable between at least one first operating configuration in which it enables loading of at least one first piece to be worked and a second operating configuration in which said first piece, loaded on the support (3), is disposed close to the tool-holding head (2) to be submitted to a predetermined series of working operations;
- at least one primary engagement seat (4) provided in the support (3) and designed to receive the workpiece, said primary engagement seat (4) being accessible to an operator close to the first operating condition of the support (3) and facing the tool-holding head (2) at the second operating condition of the support (3), the primary engagement seat (4) comprising grip elements designed to engage at least one workpiece, said grip elements comprising a plurality of clamps (7) disposed at preestablished intervals along an operating axis (6);
- at least one secondary engagement seat (5) provided in the support (3) and designed to receive a piece to be worked, said secondary engagement seat (5) preferably facing the tool-holding head (2) in the first operating condition of the support (3) and preferably being accessible to an operator in the first operating condition of the support (3), the secondary engagement seat (5) comprising grip elements designed to engage at least one workpiece, said grip elements comprising a plurality of clamps (7) disposed at preestablished intervals along an operating axis (6);
- at least one tool-holding head (2) operatively active close to said support (3) and designed to carry out a predetermined series of working operations on said first workpiece; **characterised in that** it further comprises
- control means operatively active on the tool-holding head (2) and/or the support (3) to enter a predetermined series of operating parameters, said operating parameters comprising a predetermined sequence for closing the clamps (7) on a workpiece, said closing sequence being accomplished starting from a pair of clamps (7) disposed at a greater relative distance on the support (3) and progressively going on and acting on pairs of clamps (7) disposed at a gradually decreasing relative distance.

4. a device as claimed in claim 3, **characterized in that** the primary engagement seat (4) and secondary engagement seat (5) are connected to the support (3) in such a manner that the primary engagement seat (4) is accessible to an operator while the secondary engagement seat (5) faces the tool-holding head (2), and **in that** the primary engagement seat (4) faces the tool-holding head (2) while the secondary engagement seat (5) is accessible to an operator.

5. A device as claimed in claim 3 OR 4, **characterized in that** the support (3) is rotatably mounted around an operating axis (6), movement of the support (3) to the first and/or second operating configurations being preferably carried out by rotation through a predetermined angle about said operating axis (6).

6. A device as claimed in claim 3, **characterized in that** said clamps (7) are slidably engaged along the operating axis (6), two consecutive clamps (7) defining a predetermined operating pitch (8).

7. A device as claimed in anyone of the preceding claims FROM 3 TO 6, **characterized in that** the tool-holding head (2) comprises:
- an active portion (2a) carrying a multiplicity of tools; and
- a movement block (2b) connected to said active portion (2a) to move it along and/or around a predetermined number of working axes.

8. A device as claimed in claim 7, **characterized in that** said tools are susceptible of being moved relative to the active portion (2a) between a rest position at which they do not act on the workpiece and an operating position at which they are brought into contact with the workpiece.

9. A device as claimed in claim 7, **characterized in that** the movement block (2b) comprises:
- a primary actuating unit designed to cause translation of the active portion (2a) along a first working axis (2c) which is substantially parallel to the first operating axis (6), said first working axis (2c) and operating axis (6) being preferably horizontal; and/or
- a secondary actuating unit designed to cause translation of the active portion (2a) along a second working axis (2d) substantially transverse to the operating axis (6) and the first working axis (2c), said second working axis being preferably vertical; and/or
- a tertiary actuating unit designed to cause translation of the active portion (2a) along a third working axis (2e) substantially transverse to the operating axis (6) and said second working axis (2d), said third working axis (2e) being preferably horizontal.

10. A device as claimed in anyone of the preceding claims FROM 3 TO 9, **characterized in that** said control means operatively active on the tool-holding head (2) and/or the support (3) comprise at least one programmable data processing unit.

11. A device as claimed in claim 10, **characterized in that** said operating parameters comprise:
- rotations of the support (3) around the operating axis (6);
- changes in the operating pitch (8) between two consecutive clamps;
- movements of the tools to the rest and/or operating positions;
- displacements of the tool-holding head (2) along the primary and/or secondary and/or tertiary working axes (2c, 2d, 2e).

12. A device as claimed in anyone of the preceding claims FROM 3 TO 11, **characterized in that** it comprises a given number of engagement seats connected to the support (3), the support (3) being shiftable through a predetermined number of operating configurations, said number of operating configurations preferably corresponding to the number of the engagement seats, in each of said operating configurations at least one of the engagement seats being accessible to the operator, while at least one engagement seat is positioned close to the tool-holding head (2) to enable the lather to carry out working on an already loaded piece.

## Patentansprüche

1. Verfahren für die Bearbeitung von Werkstücken, umfassend die folgenden Schritte:
- Beladen mindestens eines Werkstückes auf einem Träger (3) einer Vorrichtung (2), wobei der Träger (3) sich in einer ersten Arbeitsstellung befindet, in der das Beladen mindestens eines ersten Werkstückes ermöglicht ist, und umfasst:
- mindestens eine primäre Eingriffsaufnahme (4), die im Träger (3) vorgesehen und dazu bestimmt ist, das Werkstück aufzunehmen, wobei die primäre Eingriffsaufnahme (4) seitens eines Benutzers im Bereich der ersten Arbeitsstellung des Trägers (3) zugänglich und zum Geräteträgerkopf (2) im Bereich einer zweiten Arbeitsstellung des Trägers (3) gerichtet ist, wobei die primäre Eingriffsaufnahme (4) Greifelemente umfasst, die dazu bestimmt sind, mindestens ein Werkstück zu ergreifen, wobei die Greifelemente eine Vielzahl von Spannbacken (7) umfassen, die mit vorgegebenen Abständen längs einer Arbeitsachse (6) angeordnet sind; und
- mindestens eine sekundäre Eingriffsaufnahme (5), die im Träger (3) vorgesehen und dazu bestimmt ist, ein Werkstück aufzunehmen, wobei die sekundäre Eingriffsaufnahme (5) bevorzugter Weise zum Geräteträgerkopf (2) im Bereich der ersten Arbeitsstellung des Trägers (3) gerichtet und bevorzugter Weise seitens eines Benutzers im Bereich der ersten Arbeitsstellung des Trägers (3) zugänglich ist, wobei die sekundäre Eingriffsaufnahme (5) Greifelemente umfasst, die dazu bestimmt sind, mindestens ein Werkstück zu ergreifen, wobei die Greifelemente eine Vielzahl von Spannbacken (7) umfassen, die mit vorgegebenen Abständen längs einer Arbeitsachse (6) angeordnet sind;
- Verstellen des Trägers (3) von einer ersten Arbeitsstellung, in der er einem Benutzer zugänglich ist, um ein Beladen des Werkstückes zu ermöglichen, in eine zweite Arbeitsstellung, in der das Werkstück am Geräteträgerkopf (2) positioniert wird; und
- Durchführen einer vorbestimmten Reihe von Bearbeitungen am Werkstück über einen Geräteträgerkopf (2), der in der Nähe des Trägers (3) angeordnet ist;
**dadurch gekennzeichnet, dass** es überdies einen Schritt zur Ausführung einer Schließungsfolge umfasst, ausgehend von einem Paar von Spannbacken (7), die mit einem größeren gegenseitigen Abstand am Träger (3) angeordnet sind und allmählich fortfahren, indem auf die Spannbackenpaaren (7) eingewirkt wird, die mit einem allmählich kleiner werdenden, gegenseitigen Abstand angeordnet sind, wobei dieser Unterschritt durch Kontrollmittel ausgeführt wird, die auf den Geräteträgerkopf (2) und/oder auf den Träger (3) einwirken, um eine vorgegebene Reihe von Arbeitsparametern einzustellen, wobei die Arbeitsparameter eine vorgegebene Schließungsfolge der Spannbacken (7) auf einem Werkstück umfassen.

2. Verfahren nach Anspruch 1, **dadurch gekennzeichnet, dass** es überdies einen Schritt eines Beladens mindestens eines zweiten Werkstückes auf dem Träger (3) umfasst, wobei der Schritt des Beladens des zweiten Werkstückes bevorzugter Weise ausgeführt wird, während der Geräteträgerkopf (2) eine vorgegebene Reihe von Bearbeitungen am ersten Werkstück ausführt.

3. Gerät für die Bearbeitung von Werkstücken zur Ausführung des Verfahrens nach Anspruch 1 oder 2, das umfasst:
- mindestens einen Träger (3), der dazu bestimmt ist, mindestens ein Werkstück aufzunehmen, wobei der Träger (3) zwischen mindestens einer ersten Arbeitsstellung, in der ein Beladen mindestens eines ersten Werkstückes ermöglicht ist, und einer zweiten Arbeitsstellung beweglich ist, in der das erste, auf dem Träger (3) beladene Werkstück in der Nähe des ersten Geräteträgerkopfes (2) angeordnet ist, um eine vorgegebene Reihe von Bearbeitungen zu erfahren;
- mindestens eine primäre Eingriffsaufnahme (4), die im Träger (3) vorgesehen und dazu bestimmt ist, das Werkstück aufzunehmen, wobei die primäre Eingriffsaufnahme (4) seitens eines Benutzers im Bereich der ersten Arbeitsstellung des Trägers (3) zugänglich und zum Geräteträgerkopf (2) im Bereich der zweiten Arbeitsstellung des Trägers (3) gerichtet ist, wobei die primäre Eingriffsaufnahme (4) Greifelemente umfasst, die dazu bestimmt sind, mindestens ein Werkstück zu ergreifen, wobei die Greifelemente eine Vielzahl von Spannbacken (7) umfassen, die mit vorgegebenen Abständen längs einer Arbeitsachse (6) angeordnet sind;
- mindestens eine sekundäre Eingriffsaufnahme (5), die im Träger (3) vorgesehen und dazu bestimmt ist, ein Werkstück aufzunehmen, wobei die sekundäre Eingriffsaufnahme (5) bevorzugter Weise zum Geräteträgerkopf (2) im Bereich der ersten Arbeitsstellung des Trägers (3) gerichtet und bevorzugter Weise seitens eines Benutzers im Bereich der ersten Arbeitsstellung des Trägers (3) zugänglich ist, wobei die sekundäre Eingriffsaufnahme (5) Greifmittel umfasst, die dazu bestimmt ist, mindestens ein Werkstück aufzunehmen, wobei die Greifmittel eine Vielzahl von Spannbacken (7) umfassen, die mit vorgegebenen Abständen längs einer Arbeitsachse (6) angeordnet sind;
- mindestens einen Geräteträgerkopf (2), der im Bereich des Trägers (3) wirksam und dazu bestimmt ist, eine vorgegebene Reihe von Bearbeitungen an diesem ersten Werkstück auszuführen,
**dadurch gekennzeichnet, dass** es überdies umfasst:
- Kontrollmittel, die auf dem Geräteträgerkopf (2) und/oder auf dem Träger (3) einwirken, um eine vorgegebene Reihe von Arbeitsparametern einzustellen, wobei die Arbeitsparameter eine vorgegebene Reihe zur Schließung der Spannbacken (7) an einem Werkstück umfassen, wobei die Schließungsfolge ausgeführt wird, indem von einem Paar von Spannbacken (7) ausgegangen wird, die mit einem gegenseitigen, größeren Abstand auf dem Träger (3) angeordnet sind und allmählich fortfahren auf den Spannbackenpaaren (7) einzuwirken, die mit einem allmählich abnehmenden, gegenseitigen Abstand angeordnet sind.

4. Gerät nach Anspruch 3, **dadurch gekennzeichnet, dass** die primäre Eingriffsaufnahme (4) und die sekundäre Eingriffsaufnahme (5) mit dem Träger (3) derart verbunden sind, dass die primäre Eingriffsaufnahme (4) seitens eines Benutzers zugänglich ist, während die sekundäre Eingriffsaufnahme (5) zum Geräteträgerkopf (2) gerichtet ist, und **dadurch**, dass die primäre Eingriffsaufnahme (4) zum Geräteträgerkopf (2) gerichtet ist, während die sekundäre Eingriffsaufnahme (5) einem Benutzer zugänglich ist.

5. Gerät nach Anspruch 3 oder 4, **dadurch gekennzeichnet, dass** der Träger (3) um eine Arbeitsachse (6) herum drehbar angeordnet ist, wobei die Verstellung des Trägers (3) in der ersten und/oder in der zweiten Arbeitsstellung bevorzugter Weise über eine Drehung gemäß einem vorgegebenen Winkel um die Arbeitsachse (6) ausgeführt wird.

6. Gerät nach Anspruch 3, **dadurch gekennzeichnet, dass** die Spannbacken (7) längs der Arbeitsachse (6) verstellbar in Eingriff stehe, wobei zwei nacheinanderfolgende Spannbacken (7) einen vorgegebenen Arbeitsschritt (8) festlegen.

7. Gerät nach einem beliebigen der vorstehenden Ansprüche von 3 bis 6, **dadurch gekennzeichnet, dass** der Geräteträgerkopf (2) umfasst:
- einen wirksamen Abschnitt (2a), der eine Vielzahl von Geräten trägt; und
- einen Verstellblock (2b), der mit dem wirksamen Abschnitt (2a) verbunden ist, um ihn längs und/oder um eine vorgegebene Anzahl von Bearbeitungsachsen zu bewegen.

8. Gerät nach Anspruch 7, **dadurch gekennzeichnet, dass** die Geräte gegenüber dem wirksamen Abschnitt (2a) zwischen einer Ruhestellung, in der sie nicht auf das Werkstück wirken und einer Arbeitsstellung verstellbar sind, wo sie in Berührung mit den Werkstücken kommen.

9. Gerät nach Anspruch 7, **dadurch gekennzeichnet, dass** der Verstellblock (2b) umfasst:
- eine primäre Verstelleinheit, die dazu bestimmt ist, den wirksamen Abschnitt (2a) längs einer ersten Bearbeitungsachse (2c) zu verstellen, die im wesentlichen parallel zur ersten Arbeitsachse (69 ist, wobei die erste Bearbeitungsachse (2c) und die Arbeitsachse (6) bevorzugter Weise horizontal sind und/oder
- eine sekundäre Verstelleinheit, die dazu bestimmt ist, den wirksamen Abschnitt (2a) längs einer zweiten Bearbeitungsachse (2d) zu verstellen, die zur Arbeitsachse (6) und zur ersten Bearbeitungsachse (2c) im wesentlichen quer liegt, wobei die zweite Bearbeitungsachse bevorzugter Weise senkrecht liegt; und/oder
- eine tertiäre Verstelleinheit, die dazu bestimmt ist, den wirksamen Abschnitt (2a) längs einer dritten Bearbeitungsachse (2d) zu verstellen, die im wesentlichen zur Arbeitsachse (6) und zur zweiten Bearbeitungsachse (2d) quer liegt, wobei die dritte Bearbeitungsachse (2e) bevorzugter Weise horizontal liegt.

10. Gerät nach einem beliebigen der vorstehenden Ansprüche von 3 bis 9, **dadurch gekennzeichnet, dass** die auf den Geräteträgerkopf (2) und/oder auf den Träger (3) einwirkenden Kontrollmittel mindestens eine programmierbare Datenverarbeitungseinheit umfassen.

11. Gerät nach Anspruch 10, **dadurch gekennzeichnet, dass** die Arbeitsparameter umfassen:
- Drehungen des Trägers (3) um die Arbeitsachse (6) herum;
- Änderungen des Arbeitsschrittes (8) zwischen zwei nacheinanderfolgenden Spannbacken;
- Verstellungen der Geräte in der Ruhestellung und/oder in der Arbeitsstellung;
- Verschiebungen des Geräteträgerkopfes (2) längs der primären und/oder sekundären und/oder tertiären Arbeitsachse (2c, 2d, 2e).

12. Gerät nach einem beliebigen der vorstehenden Ansprüche von 3 bis 11, **dadurch gekennzeichnet, dass** es eine gegebene Anzahl von Eingriffsaufnahmen umfasst, die mit dem Träger (3) verbunden sind, wobei der Träger (3) in einer vorgegebenen Anzahl von Arbeitsstellungen verstellbar ist, wobei diese Anzahl von Arbeitsstellungen bevorzugter Weise der Anzahl von Eingriffsaufnahmen entspricht, wobei in jeder der Arbeitsstellungen mindestens eine der Eingriffsaufnahmen dem Benutzer zugänglich ist, während mindestens eine Eingriffsaufnahme im Bereich des Geräteträgerkopfes (2) positioniert ist, um diesen letzteren die Ausführung der Bearbeitung an einem schon geladenen Werkstück zu erlauben.

## Revendications

1. Procédé pour le travail d'objets ou pièces, comprenant les étapes suivantes:
- chargement d'au moins une première pièce à travailler sur un support (3) d'un appareil (2), ledit support (3) étant dans une première configuration de fonctionnement à laquelle il permet le chargement d'au moins une première pièce à travailler et comprenant:
. au moins un siège d'engagement primaire (4) prévu dans le support (3) et destiné à recevoir la pièce à travailler, ledit siège d'engagement primaire (4) étant accessible à un opérateur en correspondance avec ladite première condition opérante du support (3) et étant en vis-à-vis de ladite tête porte-outil (2) en correspondance avec une deuxième condition opérante du support (3), le siège d'engagement primaire (4) comprenant des éléments de prise destinés à engager au moins une pièce à travailler, lesdits éléments de prise comprenant une pluralité d'étaux (7) disposés à intervalles prédéterminés le long d'un axe opérationnel (6); et
. au moins un siège d'engagement secondaire (5) prévu dans le support (3) et destiné à recevoir une pièce à travailler, ledit siège d'engagement secondaire (5) étant de préférence en vis-à-vis de la tête porte-outil (2) dans la première condition opérante du support (3) et étant de préférence accessible à un opérateur dans la première condition opérante du support (3), le siège d'engagement secondaire (5) comprenant des éléments de prise destinés à engager au moins une pièce à travailler, lesdits éléments de prise comprenant une pluralité d'étaux (7) disposés à intervalles prédéterminés le long d'un axe opérationnel (6);
- déplacement du support (3) d'une première configuration de fonctionnement à laquelle il est accessible à un opérateur pour permettre le chargement de la pièce à travailler à une deuxième configuration de fonctionnement à laquelle la pièce à travailler se dispose près de la tête porte-outil (2); et
- exécution d'une série prédéterminée d'opérations de travail sur la pièce par une tête porte-outil (2) placée près du support (3),
**caractérisé en ce qu'**il comporte en outre une étape de réalisation d'une séquence de fermeture à partir d'une paire d'étaux (7) disposés à une distance relative supérieure sur le support (3) et avançant progressivement et agissant sur des paires d'étaux (7) disposés à une distance relative allant décroissant, ladite sous-étape étant réalisée par des moyens de contrôle actifs de manière opérante sur la tête porte-outil (2) et/ou sur le support (3) pour introduire une série prédéterminée de paramètres opérants, lesdits paramètres opérants comprenant une séquence prédéterminée pour fermer les étaux (7) sur la pièce à travailler.

2. Procédé selon la revendication 1, **caractérisé en ce qu'**il comporte en outre une étape consistant à charger au moins une deuxième pièce à travailler sur le support (3), ladite étape de chargement de la deuxième pièce étant de préférence exécutée pendant que la tête porte-outil (2) est en train d'effectuer une série prédéterminée d'opérations de travail sur la première pièce.

3. Dispositif pour le travail d'objets ou pièces réalisant le procédé des revendications 1 ou 2, comprenant:
- au moins un support (3) destiné à recevoir au moins une première pièce à travailler, ledit support (3) étant mobile entre au moins une première configuration de fonctionnement à laquelle il permet le chargement d'au moins une première pièce à travailler et une deuxième configuration de fonctionnement à laquelle ladite première pièce, chargée sur le support (3), est disposée près de la tête porte-outil (2) pour être soumise à une série prédéterminée d'opérations de travail;
- au moins un siège d'engagement primaire (4) prévu dans le support (3) et destiné à recevoir la pièce à travailler, ledit siège d'engagement primaire (4) étant accessible à un opérateur en correspondance avec ladite première condition opérante du support (3) et étant en vis-à-vis de ladite tête porte-outil (2) en correspondance avec la deuxième condition opérante du support (3), le siège d'engagement primaire (4) comprenant des éléments de prise destinés à engager au moins une pièce à travailler, lesdits éléments de prise comprenant une pluralité d'étaux (7) disposés à intervalles prédéterminés le long d'un axe opérationnel (6) ;
- au moins un siège d'engagement secondaire (5) prévu dans le support (3) et destiné à recevoir une pièce à travailler, ledit siège d'engagement secondaire (5) étant de préférence en vis-à-vis de la tête porte-outil (2) dans la première condition opérante du support (3) et étant de préférence accessible à un opérateur dans la première condition opérante du support (3), le siège d'engagement secondaire (5) comprenant des éléments de prise destinés à engager au moins une pièce à travailler, lesdits éléments de prise comprenant une pluralité d'étaux (7) disposés à intervalles prédéterminés le long d'un axe opérationnel (6);
- au moins une tête porte-outil (2) active de manière opérante en correspondance avec ledit support (3) et destinée à effectuer une série prédéterminée d'opérations de travail sur ladite pièce,
**caractérisé en ce qu'**il comporte en outre:
- des moyens de contrôle actifs de manière opérante sur la tête porte-outil (2) et/ou sur le support (3) pour introduire une série prédéterminée de paramètres opérants, lesdits paramètres opérants comprenant une séquence prédéterminée pour fermer les étaux (7) sur une pièce à travailler, ladite séquence de fermeture étant réalisée à partir d'une paire d'étaux (7) disposés à une distance relative supérieure sur le support (3) et avançant progressivement et agissant sur des paires d'étaux (7) disposés à une distance relative allant décroissant.

4. Dispositif selon la revendication 3, **caractérisé en ce que** le siège d'engagement primaire (4) et le siège d'engagement secondaire (5) sont reliés au support (3) de telle sorte que le siège d'engagement primaire (4) est accessible à un opérateur pendant que le siège d'engagement secondaire (5) est tourné vers la tête porte-outil (2), et **en ce que** le siège d'engagement primaire (4) est tourné vers la tête porte-outil (2) pendant que le siège d'engagement secondaire (5) est accessible à un opérateur.

5. Dispositif selon la revendication 3 ou 4, **caractérisé en ce que** le support (3) est monté à pivotement autour d'un axe opérationnel (6), le mouvement du support (3) à la première et/ou à la deuxième configurations de fonctionnement étant de préférence effectué par rotation selon un angle prédéterminé autour dudit axe opérationnel (6).

6. Dispositif selon la revendication 3, **caractérisé en ce que** lesdits étaux (7) sont engagés à glissement le long de l'axe opérationnel (6), deux étaux consécutifs (7) définissant un pas de fonctionnement prédéterminé (8).

7. Dispositif selon l'une quelconque des revendications précédentes 3 à 6, **caractérisé en ce que** la tête porte-outil (2) comporte:
- une portion active (2a) portant une pluralité d'outils; et
- un bloc de mouvement (2b) relié à ladite portion active (2a) pour la déplacer le long et/ou autour d'un nombre prédéterminé d'axes de travail.

8. Dispositif selon la revendication 7, **caractérisé en ce que** lesdits outils sont susceptibles de déplacement par rapport à la portion active (2a) entre une position de repos à laquelle ils n'agissent pas sur la pièce à travailler et une position opérante à laquelle ils sont amenés au contact de la pièce à travailler.

9. Dispositif selon la revendication 7, **caractérisé en ce que** le bloc de mouvement (2b) comporte:
- une unité de mouvement primaire destinée à causer la translation de la portion active (2a) le long d'un premier axe de travail (2c) qui est essentiellement parallèle au premier axe opérationnel (6), lesdits premier axe de travail (2c) et axe opérationnel (6) étant de préférence horizontaux; et/ou
- une unité de mouvement secondaire destinée à causer la translation de la portion active (2a) le long d'un deuxième axe de travail (2d) essentiellement transversal à l'axe opérationnel (6) et au premier axe de travail (2c), ledit deuxième axe de travail étant de préférence vertical; et/ou
- une unité de mouvement tertiaire destinée à causer la translation de la portion active (2a) le long d'un troisième axe de travail (2e) essentiellement transversal à l'axe opérationnel (6) et audit deuxième axe de travail (2d), ledit troisième axe de travail (2e) étant de préférence horizontal.

10. Dispositif selon l'une quelconque des revendications précédentes 3 à 9, **caractérisé en ce que** lesdits moyens de contrôle actifs de manière opérante sur la tête porte-outil (2) et/ou sur le support (3) comportent au moins une unité de traitement de données programmable.

11. Dispositif selon la revendication 10, **caractérisé en ce que** lesdits paramètres opérants comportent:
- des rotations du support (3) autour de l'axe opérationnel (6);
- des changements du pas de fonctionnement (8) entre deux étaux consécutifs;
- des mouvements de la tête porte-outil (2) le long des axes de travail primaire et/ou secondaire et/ou tertiaire (2c, 2d, 2e).

12. Dispositif selon l'une quelconque des revendications précédentes 3 à 11, **caractérisé en ce qu'**il comporte un nombre prédéterminé de sièges d'engagement reliés au support (3), le support (3) étant déplaçable selon un nombre prédéterminé de configurations de fonctionnement de préférence correspondant au nombre des sièges d'engagement, dans chacune desdites configurations de fonctionnement au moins un desdits sièges d'engagement étant accessible à l'opérateur, alors qu'au moins un siège d'engagement est positionné près de la tête porte-outil (2) pour permettre à cette dernière d'effectuer le travail sur une pièce déjà chargée.
